# EUROPÄISCHE PATENTSCHRIFT

(11) **EP 0 866 827 B1**
(45) Veröffentlichungstag und Bekanntmachung des Hinweises auf die Patenterteilung: **11.07.2001**
(21) Anmeldenummer: 96943083.4
(22) Anmeldetag: 11.12.1996
(51) Int. Cl.: C08G 69/44

(54) **NEUE HYDROLYSENBESTÄNDIGE ALIPHATISCHE POLYESTERAMIDE, IHRE HERSTELLUNG UND VERWENDUNG**
NEW HYDROLYSIS-RESISTANT ALIPHATIC POLYESTER AMIDES, THEIR PRODUCTION AND USE
NOUVEAUX POLYESTERAMIDES ALIPHATIQUES RESISTANTS A L'HYDROLYSE, LEUR PRODUCTION ET LEUR UTILISATION

(30) Priorität: 14.12.1995 DE 19546657
(43) Veröffentlichungstag der Anmeldung: 30.09.1998
(73) Patentinhaber: BK Giulini Chemie GmbH, 67029 Ludwigshafen (DE)
(72) Erfinder: CHOMIAKOW, Krzysztof, Deceased (DE); ULUBAY, Hasan, D-67125 Dannstadt (DE); WILDING, Emil, D-67134 Birkenheide (DE)
(86) Internationale Anmeldenummer: EP9605533
(87) Internationale Veröffentlichungsnummer: WO9721759

(56) Entgegenhaltungen:
- EP-A- 0 102 115
- EP-A- 0 159 053
- FR-A- 1 214 177
- GB-A- 858 757
- US-A- 3 380 840

## Beschreibung

Die vorliegende Erfindung betrifft neue, hydrolysenbeständige Polyesteramide mit hohem Molekulargewicht und teilweise isocyanat-terminierten Ketten, ihre Herstellung und Verwendung, insbesondere als Material in der Herstellung von Schuhversteifungsmaterialien.

Aus der EP-0 323 700 A2 (1) ist die Herstellung von Polyesterurethan-Folien , welche als selbstklebende Versteifungsmaterialien dienen und durch Reaktion von Polyesterketten mit Isocyanaten entstehen, bekannt. Das Isocyanatgruppen- zu Hydroxylgruppenverhältnis wird mit 0,75- 1,1, bevorzugt 0,9, angegeben. Gemäß Beispiel 1 wird das Material folgendermassen hergestellt:

Polytetramethylenadipat mit einer Hydroxylzahl von 40-45, und einer Säurezahl von 0,1-0,7 wird mit 0,003 Gew. % Phosphorsäure erhitzt und mit 7,79 Gew. % flüssigem Diisocyanat bei 85 °C reagieren gelassen. Das so erhaltene Produkt wird zu einer Folie extrudiert und mit einem Baumwollgewebe beidseitig kaschiert und kann so als Schuhversteifungsmaterial, insbesondere als Schuhkappenmaterial eingesetzt. Es hat folgende Eigenschaften: bei 60-125 °C ist das Material nicht kristallin, weich und formbar (Anspruch 2). Das Material ist nach Erhitzen auf 85 °C und abkühlen lassen nach etwa 12 Minuten kristallin, weiß. Die physikalischen Eigenschaften dieses Materials sind nur sehr unvollständig bekannt. Chemisch handelt es sich hier um ein Polyesterurethan, das definitionsgemäß eine Verbindung ist, die in der Polymerkette eingebaute Urethangruppen besitzt.

In der EP-0 448 079 A2, (2), wird ein hochmolekulares Polyhexamethylenadipat und ein Verfahren zu seiner Herstellung beschrieben, das im Gegensatz zum Material und Verfahren von (1) ohne Isocyanatzusatz das angestrebte hohe Molekulargewicht besitzt. Beide polymeren Materialien dienen dem gleichen Einsatzzweck, nämlich CAPA™ oder Polycaprolacton zu ersetzen, siehe Seite 3, Zeile 29ff. Das hohe Molekulargewicht bzw. die hohe Viskosität von mind. 300 Ps wird in (2) dadurch realisiert, daß das Molverhältnis von Diol/Säure innerhalb von 0,99-1,03 liegt, insbesondere das Diol in einem leichten Überschuß, bei einem Molverhältnis von 1,001 bis 1,01, eingesetzt wird. Das Herstellungsverfahren ist eine einfache Polykondensation, bei Temperaturen unterhalb von 223°C, wobei mit Hilfe der üblichen Katalysatoren gearbeitet wird.

In der EP-0 499 534 A2, (3), wird ebenfalls ein hochmolekulares Polytetramethylen- und/oder Polypentamethylenadipat und eventuell auch Polyhexamethylenadipat beschrieben. Das angestrebte hohe Molekulargewicht sollte mindestens 10,000 betragen, dies entspricht übrigens auch dem Wert in (2). Es handelt sich in (3) auch um einen polymeren Heißschmelzkleber, der das Polycaprolacton im selben Einsatzgebiet ersetzen soll. In (3) wird ebenfalls ohne Isocyanaten gearbeitet und das hohe Molekulargewicht durch einen leichten Überschuß an Diol realisiert. Ansonsten sind beide Verfahren bis auf die entsprechenden Einsatzstoffe fast identisch.

In der EP -0 572 256 A2 (4) wird die Herstellung von biologisch abbaubaren hochmolekularen aliphatischen Polyestern offenbart. Zur Stabilisierung der Polyester werden zwingend Phosphorsäure bzw. Phosphorsäureester zugefügt. Die Polyester werden aus einem aliphatischen oder alicyclischen Glykol durch Veresterung mit einer aliphatischen Dicarbonsäure hergestellt. Nach der Bildung der Polyester wird die Phosphorsäureverbindung und die polyfunktionelle Isocyanatverbindung zur Vernetzung zugesetzt. Auf diese Weise wird erreicht, daß das Endprodukt biologisch abbaubar und hochmolekular ist, aber gleichzeitig gegen thermische Zersetzung stabil ist.
Das so hergestellte Endprodukt wird in Form von Folien oder Schäumen bzw. in Gußartikeln , hauptsächlich im Fahrzeugbau, verwendet.

Es ist weiterhin aus J. of Applied Polymer Science, 1809-1822, (1982) (5) bekannt, Polyesteramide durch Random und Blockpolymerisation herzustellen. Dabei werden Diole, z.B. Dekanole mit Adipinsäuredichlorid und einem Diamin miteinander umgesetzt. Alle Komponenten werden in etwa gleichen Teilen eingesetzt.

Die oben erwähnten polymeren Heißschmelzkleber besitzen jedoch noch nicht die geforderten bifunktionellen Eigenschaften für den Einsatz als Schuhversteifungsmaterial. Solche Eigenchaften sind: hohe Hydrolysebeständigkeit, gepaart mit guter Verarbeitbarkeit z.B. in der Pulverbeschichtungstechnologie.
Die Hydrolysebeständigkeit während ihrer Anwendungszeit ist eine sehr wichtige Eigenschaft, denn diese Materialien werden ständig Feuchtigkeit ausgesetzt. Da das Material in einem engen Temperaturbereich von 50 bis 80 °C verarbeitet werden muß, müssen seine Schmelz-, aber auch seine mechanischen Eigenschaften im kristallisierten Zustand entsprechend optimal sein.
Die Aufgabe der vorliegenden Erfindung bestand also darin, vor allem hydrolysebeständige Heißschmelzklebersysteme auf Polyesterbasis, zu entwickeln, die sich besonders bei der Herstellung von Schuhversteifungsmaterialien verwenden lassen, insbesondere solche, die bifunktional eingesetzt werden können, nämlich als Heißschmelzkleber zum Kleben bei Temperaturen von ca. 50 bis 80 °C und auch als Versteifungsmaterialien.

Die Aufgabe konnte durch ein hydrolysebeständiges Polyesteramid mit hohem Molekulargewicht und teilweise isocyanat-terminierten Ketten gelöst werden, das durch eine ternäre Polykondensation aus folgenden Monomeren erhältlich ist:
a.) Diole der allg. Formel:
   HO-R₁-OH, wobei R₁ ein aliphatischer Rest mit 2-16, bevorzugt 4-12 Kohlenstoffatomen ist (Komponente a)
b.) Dicarbonsäuren der allg. Formel:
   COOH-R₂-COOH, worin R₂ ein aliphatischer Rest mit 1-14, bevorzugt 2-8 Kohlenstoffatomen ist (Komponente b)
c.) Diamine der allg. Formel:
   NH₂ - R₃-NH₂, worin R₃ ein aliphatischer Rest mit 2-16, bevorzugt 4-8 Kohlenstoffatomen bedeutetet (Komponente c) und diese in Mengen bis 5 Gew. % bezogen auf die Summe der kettenbildenden Komponenten eingesetzt wird,
   wobei während der Polykondensation ein Katalysator (Komponente d) und eine organische und/oder anorganische Phosphorverbindung (Komponente e)) eingesetzt wird, und das resultierende Polymer mit einem mittleren Molekulargewicht von > 30.000 D eine stetig lineare Struktur und hohe Kristallinität aufweist, mit einem mehrwertigen Isocyanat (Komponente f) kurzzeitig zur Reaktion gebracht wird und das so erhaltene Polyesteramid eine Viskosität von mind. 50.000 cPs aufweist.. Die Eigenschaften der erfindungsgemäßen Polyesteramide werden einerseits durch die Art der Herstellung und andererseits durch die Auswahl der Monomeren, Stabilisatoren und Katalysatoren bestimmt.
   Als Komponente a kommen insbesondere 1,4 -Butandiol oder 1,6 Hexandiol in Frage. Adipinsäure ist die bevorzugte Komponente b, mit der die Diole am besten reagieren.
   Hexamethylendiamin wird als Komponente c hauptsächlich eingesetzt. Das Katalysatorsystem, bestehend aus organischen oder anorganischen Zinnverbindungen, insbesondere aus Zinn(II)oxid in Verbindung mit phosphorigen (P(III) Verbindungen, hier Zinn(II)phosphit, garantiert minimale Nebenreaktionen und Aufbau eines hohen Molekulargewichts (ca. 40.000) mit streng linearer Struktur und hoher Kristallinität. Bei Zusatz geringer Mengen Diisocyanat werden diese an das Polymergerüst addiert und somit immobilisiert, was bei einer Anwendung z.B. mit Hautkontakt=Feuchtigkeit eine erhöhte Stabilität zur Folge hat, ohne jedoch das Molekulargewicht und die Viskosität zu erhöhen. Hier ist es besonders wichtig zu betonen, daß die Isocyanatgruppen lediglich endständig in der Polymerkette vorliegen und nicht eingebaut sind. Die Zugabe einer geringen Menge an Hexamethylendiisocyanat (Komponente f) bewirkt, daß die die Hydrolyse katalysierenden Protonen unter feuchten Bedingungen abgefangen werden. Ansonsten würde die für gewöhnliche Polyester typische Spaltung (Hydrolyse) der Estergruppen stattfinden und zum raschen Abbau der Ketten und zur Verschlechterung der mechanischen Eigenschaften führen.
   Die Hydrolysestabilität ist also in diesem Falle als chemische Beständigkeit gegenüber der Einwirkung von Feuchtigkeit und saurem Milieu beschreibbar. Man kann das Fortschreiten der Hydrolyse, d.h. das Spalten der langen Polymerketten an der Änderung der physikalischen Eigenschaften erkennen. Vorhandene oder durch Hydrolyse entstandene kurze Ketten verursachen Erhöhung der Bruchneigung bis hin zum glas- oder wachsartigem Verhalten mit gleichzeitigem Abfall der Schmelzviskosität.
   Durch die spezielle Auswahl der Monomeren wird die streng lineare Struktur realisiert. Deshalb ist es wichtig, Monomeren auszuwählen , bei denen die Anzahl der Kohlenstoffatome gerade ist.
   Die Struktur des Polyesters ist direkt korrelierbar zur Rekristallisationszeit. Bei der unten beschriebenen zweistufigen Fahrweise entsteht eine streng lineare Blockstruktur und bedingt dadurch eine hohe Ordnung und damit auch eine kürzere Rekristallisationszeit. Arbeitet man dagegen einstufig, so entsteht eine sog. Random-Struktur, mit zufällig angeordneten Polymerketten. Dadurch steigt aber auch die Rekristallisationszeit.

Die Herstellung des Polyesteramids erfolgt in einer oder in zwei Stufen. Damit ist der Zeitpunkt der Zugabe der Aminkomponente gemeint: sofort am Anfang des Verfahrens (1 stufig) oder nach Erreichen durch die Komponenten a und b eines Polymerisationsgrades von 6-14 (2 stufig). Am Anfang werden die Komponenten a, b und ggf. c unter Inertgas und Rühren schonend geschmolzen und mit dem Katalysator (Komponente d und e) versetzt. Als Katalysatoren können organische und/oder anorganische Zinnverbindungen in Kombination mit phosphoriger Säure und/oder deren Ester oder Metallphosphite, eingesetzt werden. Zur Vermeidung von Zersetzungsreaktionen des Polyesters wird in schwach saurem Milieu gearbeitet
Diese Schmelze wird ca. 1 Stunde lang im Temperaturbereich bis 230 °C, bevorzugt bei 100-110°C verestert und anschließend allmählich hochgeheizt unter gleichzeitiger kontinuierlicher Abdestillation des Reaktionswassers Schmelzpolykondensation ggf. mit Schleppmitteln und azeotroper Destillation des Reaktionswassers). Vor Anlegen des Vakuums wird ggf. ein im Stand der Technik bekannter Umesterungskatalysator, z.B. ein Titansäureester in einer wirksamen Menge zugesetzt. .Anschließend wird unter weiterem Rühren, die Komponente f, z.B. Hexamethylendiisocyanat zugesetzt und etwa 5 -10 Minuten zur Reaktion gebracht. Das Polyesteramid wird in Form einer heißen, hochviskosen Schmelze erhalten, die nach Gießen in kaltes Wasser in Strangform überführt wird. Ein solches festes Produkt kann nach Granulieren und Mahlen in Form eines Pulvers, z.B. in Pulverbeschichtungsmaschinen verwendet werden..

### Bestimmung von Produkteigenschaften

Die Schmelztemperatur sowie die Rekristallisationszeit wurden mittels eines DSC-Gerätes der Fa. Mettler DSC 12 E gemessen. Die Grenzviskositätszahlen wurden mittels eines automatischen Ubbelohde-Viskosimeters in Xylol bei 25°C bestimmt. Der "Ausfall" wurde manuell ermittelt und in einer Skala von 1...10 bewertet (1 - plastisch, 10 - ideal elastisch).

### Prüfung der Hydrolysebeständigkeit

Aus den Produkten der Beispiele 1 - 7 und Vergleichsbeispiele 1 und 2 wurden ca. 0,5 mm starke Folien gewalzt, die in einer Klimakammer unter folgenden Bedingungen gelagert wurden:
- Temperatur 50°C
- relative Luftfeuchte 85%

In regelmäßigen Zeitabständen wurde das Nachlassen der Bruchfestigkeit der Folien überprüft. Dies geschah durch Abknicken der Folie um 180° und Begutachten der Knickstelle. Die Zeit (in Tagen) bis zum ersten Ermüdungsbruch wurde als relatives Maß für Hydrolysebeständigkeit angesehen.

Die folgenden Beispiele sollten die Erfindung näher illustrieren.

### Beispiel 1 nicht erfindungsgemäß

168 g Adipinsäure und 136,5 g 1,6-Hexandiol werden in einen 500 ml-Rundkolben gegeben und mit Stickstoff überlagert. Das Gemisch wird unter Rühren schonend geschmolzen und mit 0,25 g Zinn-II-Phosphit (Katalysator) versetzt. Man läßt ca. 1 Std. bei 100-110°C reagieren und steigert die Temperatur über 10 Std. auf 210°C, wobei das entstehende Reaktionswasser kontinuierlich abdestilliert wird. Nach Erreichen einer Temperatur von ca. 200°C wird außerdem allmählich der Druck reduziert (bis 0,5 mbar). Nach ca. 9 Std. steigt die Produktviskosität merklich (Viskorührer !), man rührt weitere 4 Std. bis zum Erreichen einer konstant hohen Viskosität (100 - 150 Pa·s). Die Temperatur wird jetzt auf ca. 150°C reduziert, das Vakuum mit Stickstoff gebrochen und man tropft 1,1 g Hexamethylendiisocyanat zu. Es wird noch 2-3 Minuten gerührt, wobei keine weitere Viskositätserhöhung beobachtet wird. Danach gießt man das ca. 120° heiße Produkt ins kalte Wasser und erhält dieses in Strangform. Säurezahl < 0,3 mg KOH/g. Eigenschaften: siehe Tabelle.

### Beispiel 2 /Teil 1

25 kg Adipinsäure werden unter Rühren in 16,18 kg 1,4-Butandiol eingeschlämmt. Man setzt einen Mischkatalysator zu (20:80-Gemisch von Zinn(II)-Oxid und Zinn(II)-Phosphit) und spült den Reaktionskessel mit Stickstoff. Es wird auf 110°C aufgeheizt und 1,5 Std. gerührt, danach steigert man die Temperatur über 10 Std. auf 200°C und destilliert dabei das Reaktionswasser ab. Später reduziert man den Druck auf ca. 400 mbar und destilliert eine geringe Menge Butandiol ab. Nach ca. 1 Std. erhält man ein weißes, wachsartiges Zwischenprodukt mit Säurezahl = 56-64 mg KOH/g..

### Teil 2/1(erfindungsgemäß)

300 g Zwischenprodukt aus Teil 1 wurde in einem Rührkolben mit 6 g 1,6-Diaminohexan versetzt und unter stark reduziertem Druck (0,5 - 1 mbar) bei 210°C kondensiert. Nach 12 Stunden erhält man ein hochviskoses Polyesteramid mit SZ<0,5, das anschließend bei 120°C mit 0,5 g HMDI versetzt und nach 3 Minuten in Strangform gegossen wird. Eigenschaften: siehe Tabelle 1

### Teil 2/2 (nicht erfindungsgemäß)

300 g Zwischenprodukt aus Teil 1 wurde in einem Rührkolben mit 0,06 g Tetraisopropylorthotitanat versetzt und unter reduziertem Druck (ca. 1 mbar) bei 210-215°C polykondensiert. Nach 5 Stunden erhält man einen viskosen Polyester mit SZ<1,5, das anschließend bei 120°C mit 1,5 g HMDI versetzt wird. Es wird noch 20 Minuten nachgerührt, wobei eine spürbare Viskositätserhöhung stattfindet.

### Beispiele 3-7

Nach dem Schema der Beispiele 1 und 2 wurden weitere Produkte hergestellt. Die genauen Bedingungen sind in der Tabelle 1 gelistet.

### Vergleichsbeispiel 1

Aus Adipinsäure und Hexandiol wurde ein Polyester gemäß europäischer Patentanmeldung EP-0 448 079 A1 hergestellt.

### Vergleichsbeispiel 2

Aus Adipinsäure, Bernsteinsäure und Butandiol wurde ein Polyester gemäß Beispiel 3 der europäischer Patentanmeldung EP-0 569 149 A1 hergestellt.

### Vergleichsbeispiel 3

180 g handelsübliches Polyesterdiol mit Hydroxylzahl 44 wurde in einem Rührbehälter, der mit einem Viskorührer ausgestattet war, bei 85°C mit 10,8 g Hexamethylendiisocyanat versetzt (analog EP 323 700). Nach ca. 30 Minuten setzte eine starke Viskositätserhöhung ein. Der Inhalt wurde noch ca. 2 Std. gerührt, bis eine konstante Schmelzviskosität festgestellt wurde. Sodann wurde das Produkt ins kalte Wasser in Strangform gegossen.

### Reaktionsbedingungen

| Bsp.Nr. | AdS g | DS g | BD g | HD g | DAH | DAO | HMDI g | Sn[%] | TPT g | ArbA. | Reak Zeit |
|---|---|---|---|---|---|---|---|---|---|---|---|
| 1 | 168,0 | 0,0 | 0.0 | 136,5 | 0,0 | 0,0 | 1,10 | 0,041 | 0,00 | | 24 |
| 2/1 | 192,9 | 0,0 | 124,8 | 0,0 | 7,9 | 0,0 | 0,82 | 0,036 | 0,02 | 2-stufig | 23 |
| 2/2 | 192,9 | 0,0 | 124,8 | 0,0 | 0,0 | 0,0 | 1,20 | 0,036 | 0,05 | | 22 |
| 3 | 146,2 | 0,0 | 44,1 | 59,1 | 6,0 | 0,0 | 0,52 | 0,053 | 0,00 | 1-stufig | 28 |
| 4 | 0,0 | 230,4 | 0,0 | 115,7 | 0,0 | 4,3 | 0,66 | 0,001 | 0,03 | 1-stufig | 29 |
| 6 | 146,2 | 0,0 | 94,6 | 0.0 | 0,0 | 4,3 | 0,41 | 0,025 | 0,00 | 2-stufig | 23 |
| 7 | 146,2 | 0,0 | 0,0 | 116,9 | 6,0 | 0,0 | 0,95 | 0.040 | 0,00 | 2-stufig | 20 |
| Vgl. 1 | 207,9 | 0,0 | 0,0 | 168,9 | 0,0 | 0,0 | 0,00 | 0,005 | 0,08 | | 23 |
| Vgl. 2 | 25,0 | 198^{*}) | 177,0 | 0,0 | 0,0 | 0,0 | 4,66 | 0,000 | 0,02 | | 15 |
| Vgl.3 | --- | --- | --- | --- | --- | --- | 10,80 | --- | | | 3 |

### Produkteigenschaften

| Bsp.Nr. | Fp | [µ] | Rekr. Zeit | Ausfall | HBst |
|---|---|---|---|---|---|
| 1 | 62 | 0,56 | 9 | 9 | 278 |
| 2/1 | 60 | 0,49 | 17 | 7 | 259 |
| 2/2 | 59 | 0,53 | 11 | 8 | 189 |
| 3 | 61 | 0,55 | 24 | 5 | 233 |
| 4 | 68 | 0,89 | 18 | 8 | 297 |
| 6 | 61 | 0,47 | 15 | 7 | 263 |
| 7 | 61 | 0,53 | 11 | 8 | 277 |
| Vgl. 1 | 62 | 0,56 | 8 | 9 | 177 |
| Vgl. 2 | 101 | 0,71 | 16 | 8 | 146 |
| Vgl. 3 | 58 | 0,49 | 18 | 4 | 128 |

### In den Tabellen verwendeten Abkürzungen:

- AdS: Adipinsäure
- DS: Dodekandisäure
- BD: 1,4 Butandiol
- HD: 1,6 Hexandiol
- DAH: 1,6 Diaminohexan
- DAO: 1,8 Diaminooktan
- HMDI: Hexamethylendiisocyanat
- Sn: Zinnkatalysator (% Sn)
- TPT: Tetraisopropyltitanat
- Arw.: Art der Zugabe der Aminkomponente
- Reak.z: Reaktionszeit in Stunden (gesamt)
- Fp: Schmelztemperatur
- [µ]: Grenzviskosität
- Rekrist.z.: Rekristallisationszeit in Min/40 °C
- Ausfall: Zusammenspiel von Festigkeit und Elastizität von 1-10
- Hbst: Hydrolysebeständigkeit

## Patentansprüche

1. Hydrolysebeständiges aliphatisches Polyesteramid mit hohem Molekulargewicht, und teilweise isocyanat-terminierten Ketten, erhältlich durch ein Verfahren bei dem eine ternäre, ggf. zweistufige Polykondensation aus den folgenden Monomeren:
Diole der allg. Formel:
OH -R₁-OH, wobei R₁, ein aliphatischer Rest mit 2-16 Kohlenstoffatomen ist (Komponente a)
Dicarbonsäuren der allg. Formel:
COOH-R₂-COOH, wobei R₂ ein aliphatischer Rest mit 1-14 Kohlenstoffatomen ist (Komponente b)
Diamine der allg. Formel:
NH₂ -R₃-NH₂ (Komponente c)
wobei R₃ ein aliphatischer Rest mit 2-16 Kohlenstoffatomen ist und in Mengen bis 5 Gew. % bezogen auf die Summe der kettenbildenen Komponenten eingesetzt wird, unter Verwendung eines metallhaltigen Katalysators (Komponente d) in Kombination mit einer organischen und/oder anorganischen Phosphorverbindung (Komponente e), durchgeführt wird, wobei das so erhaltene Polymer anschließend mit einer mehrwertigen Isocyanatverbindung (Komponente f) behandelt wird, und das so erhaltene Polyesteramid eine Viskosität, gemessen in Xylol bei 25 °C mittels eines Ubbelohde Viskosimeters von mind. 50.000 cPs aufweist und das Verfahren folgende Schritte umfasst:
• Umsetzung der Komponente a mit der Komponente b und mit der Komponente c unter Verwendung des Katalysators (Komponente d und e) im Temperaturbereich bis 230 °C
• Kondensation unter Inertgas bzw. Vakuum
• Abdestillieren des Reaktionswassers
• Behandlung mit der Komponente f bei Normaldruck und reduzierter Temperatur maximal 10 Minuten lang
• Abschrecken der so erhaltenen heißen Schmelze im kalten Wasser abgeschreckt
• Granulation.

2. Polyesteramid nach Anspruch 1, dadurch gekennzeichnet, daß die Komponente a ein aliphatisches Diol mit 4 bis 12 Kohlenstoffatomen ist.

3. Polyesteramid nach Anspruch 2, dadurch gekennzeichnet, daß die Komponente b eine aliphatische Dicarbonsäure mit 3-8 Kohlenstoffatomen ist.

4. Polyesteramid nach Anspruch 3, dadurch gekennzeichnet, daß die Komponente c ein aliphatisches Diamin mit 4-8 Kohlenstoffatomen ist.

5. Polyesteramid nach Anspruch 4, dadurch gekennzeichnet, daß die Komponente d eine anorganische Zinn (II)-Verbindung ist.

6. Polyesteramid nach Anspruch 5, dadurch gekennzeichnet, daß die Komponente e eine anorganische oder organische Phosphor(III)-Verbindung ist.

7. Polyesteramid nach Anspruch 6, dadurch gekennzeichnet, daß die Komponente fein Diisocyanat ist.

8. Verwendung des Polyesteramids nach den Ansprüchen 1 bis 7 als Heißschmelzkleber.

## Claims

1. Hydrolysis-resistant aliphatic polyester amide of high molecular weight and partly isocyanate-terminated chains, obtainable through a process in which a ternary possibly two-stage condensation polymerisation from the following monomers is carried out:
diols of the general formula:
OH-R₁-OH, where R₁ is an aliphatic group with 2 - 16 carbon atoms (component a)
dicarboxylic acids of the general formula:
COOH-R₂-COOH, where R₂ is an aliphatic group with 1 - 14 carbon atoms (component b)
diamines of the general formula:
NH₂-R₃-NH₂ (component c)
where R₃ is an aliphatic group with 2 - 16 carbon atoms and is used in quantities of up to 5 w/w % related to the total of the chain-forming components, making use of a metal-containing catalyst (component d) in combination with an organic and/or inorganic phosphorus compound (component e), whereby the polymer thus obtained is then treated with a polyvalent isocyanate compound (component f), and the polyester amide thus obtained has a viscosity measured in xylene at 25° C with an Ubbelohde viscometer of at least 50,000 cPs, and the process includes the following steps:
• reaction of component a with component b and with component c using the catalyst (component d and e) in the temperature range up to 230° C
• condensation under inert gas or vacuum
• distilling off of the reaction water
• treatment with component f at normal pressure and reduced temperature for a maximum of 10 minutes
• chilling of the hot melt thus obtained in cold water
• granulation.

2. Polyester amide according to Claim 1,
**characterised in that**
component a is an aliphatic diol with 4 to 12 carbon atoms.

3. Polyester amide according to Claim 2,
**characterised in that**
component b is an aliphatic dicarboxylic acid with 3 - 8 carbon atoms.

4. Polyester amide according to Claim 3,
**characterised in that**
component c is an aliphatic diamine with 4 - 8 carbon atoms.

5. Polyester amide according to Claim 4,
**characterised in that**
component d is an inorganic tin(II) compound.

6. Polyester amide according to Claim 5,
**characterised in that**
component e is an inorganic or organic phosphorus(III) compound.

7. Polyester amide according to Claim 6,
**characterised in that**
component f is a diisocyanate.

8. Use of the polyester amide according to Claims 1 to 7 as hot-melt adhesive.

## Revendications

1. Polyester amide aliphatique, résistant à l'hydrolyse, présentant un haut poids moléculaire et des chaînes partiellement terminées par des isocyanates, pouvant être obtenu par un processus au cours duquel une polycondensation ternaire, éventuellement en deux temps, est effectuée à partir des monomères suivants :
des diols de formule générale :
OH-R₁-OH, où R₁ est un groupement aliphatique composé de 2 à 16 atomes de carbone (composant a)
des acides dicarboxyliques de formule générale :
COOH-R₂-COOH, où R₂ est un groupement aliphatique composé de 1 à 14 atomes de carbone (composant b)
des diamines de formule générale :
NH₂-R₃-NH₂ (composant c)
où R₃ est un groupement aliphatique composé de 2 à 16 atomes de carbone, et incorporé selon une proportion de 5 % *m/m* par rapport à la somme des composants des chaînes, en utilisant un catalyseur métallifère (composant d) en association avec un composé contenant du phosphore organique et/ou inorganique (composant e), et au cours duquel le polymère ainsi obtenu est traité avec un isocyanate polyvalent (composant f), et le polyester amide ainsi obtenu présente une viscosité dans le xylène, mesurée à 25 °C à l'aide d'un viscosimètre Ubbelohde, d'au moins 50 000 cPa.s, et qui comprend les étapes suivantes :
• Réaction du composant a avec le composant b et le composant c sous l'action du catalyseur (composants d et e) à une température allant jusqu'à 230 °C
• Condensation dans un gaz inerte ou sous vide
• Distillation de l'eau de la réaction
• Traitement avec le composant f sous pression normale et température réduite pendant une durée maximale de 10 minutes
• Trempage dans l'eau froide de la masse fondue à chaud ainsi obtenue
• Granulation.

2. Polyester amide selon la revendication 1, caractérisé par le fait que le composant a est un diol aliphatique composé de 4 à 12 atomes de carbone.

3. Polyester amide selon la revendication 2, caractérisé par le fait que le composant b est un acide dicarboxylique aliphatique composé de 3 à 8 atomes de carbone.

4. Polyester amide selon la revendication 3, caractérisé par le fait que le composant c est une diamine aliphatique composée de 4 à 8 atomes de carbone.

5. Polyester amide selon la revendication 4, caractérisé par le fait que le composant d est un composé à base d'étain (II) inorganique.

6. Polyester amide selon la revendication 5, caractérisé par le fait que le composant e est un composé à base de phosphore (III) inorganique ou organique.

7. Polyester amide selon la revendication 6, caractérisé par le fait que le composant f est un diisocyanate.

8. Utilisation du polyester amide conformément aux revendications 1 à 7 comme adhésif thermofusible.
